**Europäisches Patentamt**

**European Patent Office**

**Office européen des brevets**

(11) Veröffentlichungsnummer: **0 285 740 B1**

## EUROPÄISCHE PATENTSCHRIFT

(45) Veröffentlichungstag der Patentschrift: **15.01.92**

(21) Anmeldenummer: **88100090.5**

(22) Anmeldetag: **07.01.88**

(51) Int. Cl.⁵: **B32B 11/08**

(54) **Magnetisch haftende Dämpfungsfolie.**

(30) Priorität: **08.04.87 DE 3711810**

(43) Veröffentlichungstag der Anmeldung:
**12.10.88 Patentblatt 88/41**

(45) Bekanntmachung des Hinweises auf die
Patenterteilung:
**15.01.92 Patentblatt 92/03**

(84) Benannte Vertragsstaaten:
**BE DE FR GB NL**

(56) Entgegenhaltungen:
**DE-U- 8 512 542**
**FR-A- 2 561 582**

(73) Patentinhaber: **RÜTGERSWERKE AKTIENGE-**
**SELLSCHAFT**
**Mainzer Landstrasse 217**
**W-6000 Frankfurt am Main 1(DE)**

(72) Erfinder: **Rühl, Karl, Dr.**
**Hochwaldstrasse 13**
**W-6350 Bad Nauheim(DE)**
Erfinder: **Bildner, Karlheinz**
**Odenwaldstrasse 32**
**W-6458 Rodenbach 1(DE)**

**Beschreibung**

Die Erfindung betrifft eine bituminöse Dämpfungsfolie, die unterseitig mit einem bitumenverträglichen Schmelzkleber versehen ist und magnetische oder magnetisierbare Teilchen enthält.

Dämpfungsfolien dieser Art werden beispielsweise im Automobilbereich zum Entdröhnen von Karosserieteilen verwendet. Sie haben entweder einen homogenen Aufbau mit gleichmäßiger Verteilung der magnetischen Teilchen oder einen sandwichartigen Aufbau aus einer magnetischen und einer Dämpfungsschicht (siehe DE-U-8 512 542). Oberseitig können sie mit einer Kaschierung versehen oder mit einem Antiblockmittel beschichtet sein (siehe FR-U-2 561 582). Zur Verbesserung der Dämpfungseigenschaften wird das verwendete Bitumen meist mit Kunststoffen oder Kunstharzen und organischen Füllstoffen modifiziert. Die magnetischen Teilchen, wie beispielsweise Ferritpulver, ermöglichen eine vorläufige Positionierung der Dämpfungsfolie während des Einbaus und fixieren sie bis zum Aufschmelzen auf der Unterlage und Wiederverfestigen des Schmelzklebers während des Ofendurchgangs, bei dem Temperaturen bis etwa 190 °C erreicht werden.

Ein Nachteil dieser Dämpfungsfolien besteht darin, daß zwischen Schmelzkleberschicht und Unterlage eingeschlossene Luftblasen sich infolge der hohen Temperaturen und der verringerten Viskosität der bituminösen Massen ungehindert ausdehnen können und so eine gute Verbindung zwischen den Folien und der Unterlage teilweise behindern. Dies wirkt sich negativ auf das Dämpfungsverhalten aus.

Es bestand daher die Aufgabe eine magnetische haftende bituminöse Dämpfungsfolie zu entwickeln, die auch nach dem Ofendurchgang keine Blasenbildung zeigt.

Die Aufgabe wird erfindungsgemäß dadurch gelöst, daß die Dämpfungsfolie oberhalb der Schmelzkleberschicht 4 eine flexible, in der Dämpfungsfolie eingebettete, bis mindestens 190 °C beständige Folie 5 enthält.

Diese flexible Folie beteht vorzugsweise aus einem wärmebeständigen Kunststoff wie beispielsweise einem Polyester. Es können aber auch Metallfolien verwendet werden.

Es hat sich gezeigt, daß bei bis zu 3 mm dicken Dämpfungsfolien die Blasenbildung besonders gut verhindert wird, wenn der Abstand der flexiblen Folie zur Schmelzkleberschicht nicht mehr als 1 mm beträgt. Bei dickeren Dämpfungsfolien bilden sich Blasen oder Krater, wenn der Abstand 50 % ihrer Dicke überschreitet. Er sollte daher vorzugsweise nicht mehr als 30 % der Dicke der Dämpfungsfolie betragen.

Gewebe, Vliese und ähnliche Verstärkungseinlagen sind nicht in der Lage, die Blasenbildung wirkungsvoll zu verhindern.

Als zusätzlicher Effekt wird bei der Verwendung flexibler Folien mit geringer Dehnung der Verlustfaktor erhöht. Daduch werden die Dämpfungseigenschaften der Dämpfungsfolie verbessert.

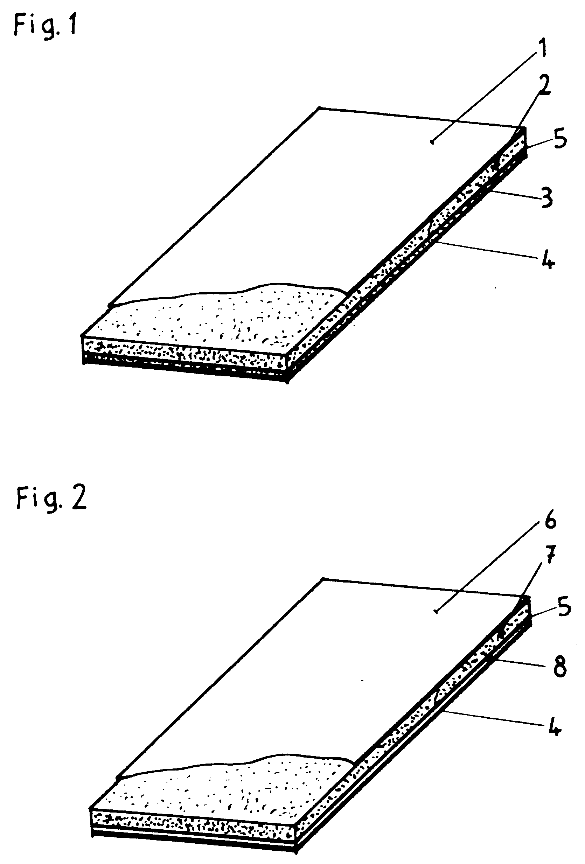

Die Erfindung wird anhand der Fig. 1 und 2 näher erläutert. Dabei zeigt die Fig. 1 eine Dämpfungsfolie mit homogener Verteilung der magnetischen Teilchen und die Fig. 2 eine solche mit getrennter Magnet- und Dämpfungsschicht.

Die 4 mm dicke Dämpfungsfolie in Fig. 1 ist oberseitig mit einer Polyethylenfolie 1 kaschiert. Darunter befindet sich eine erste etwa 2,7 mm dicke Ferritpulver enthaltende Dämpfungsschicht 2 aus 40 Gew.-% Barium-oder Strontiumferrit, 30 Gew.-% elastomermodifiziertem Bitumen und 30 Gew.-% Glimmer und Schiefermehl. Dann folgt als flexible Folie 5 eine dünne Aluminiumfolie und darauf eine zweite, etwa 1,3 mm dicke Ferritpulver enthaltene Dämpfungsschicht 3 mit gleicher Zusammensetzung wie die Schicht 2, die unterseitig mit einen zwischen 120 und 160 °C schmelzenden, bitumenverträglichen Kleber 4 beschichtet ist.

Die Fig. 2 zeigt eine erfindungsgemäße Dämpfungsfolie, die an der Oberseite mit einem bitumenverträglichen, unterhalb von 90 °C festen Antiblockmittel 6 beschichtet ist. Darunter befinden sich die eigentliche Dämpfungsschicht 7 aus 20 bis 50 Gew.-% Bitumen, 2 bis 6 Gew.-% Copolymerisat und 44 bis 78 Gew.-% eines anorganischen Füllstoffs, die mit der magnetischen bzw. magnetisierbarer Schicht 8 aus 20 bis 50 Gew.-% Bitumen und 50 bis 80 Gew.-% Ferritpulver verbunden ist. Die Ferritpartikel werden nach der Herstellung der Folie in einem starken Magnetfeld in gerichtete Permanentmagneten umgewandelt. Auf der Unterseite ist ein zwischen 120 und 190 °C schmelzender, bitumenverträglicher Kleber 4 aufgetragen. Zwischen der Dämpfungsschicht und der magnetichen Schicht 8 befindet sich eine Polyesterfolie als flexible Folie 5.

Als Ferritpulver werden vorzugsweise solche aus Barium-und Strontiumferrit verwendet. Neben den üblichen mineralischen Füllstoffen wie Glimmer, Schwerspat und Schiefermehl werden insbesondere Silikatmikrohohlkugeln und anorganische Fasern alleine oder im Gemisch mit den bekannten Füllstoffen in die Dämpfungsfolie eingebracht.

In der bevorzugten Ausführungsform enthält die Dämpfungsfolie eine 0,3 bis 1 mm starke magnetische bzw. magnetisierbare Schicht. Die Stärke ist abhängig vom Flächengewicht und dem Ferritanteil. Schichtdicken von weniger als 0,3 mm lassen sich technisch nicht gleichmäßig herstellen. Eine Dämpfungsschicht von 2 bis 3 mm Stärke erfüllt die meisten der im Automobilbau gestellten Aufgaben. Als Schmelzkleber und Antiblockmittel kommen vorzugsweise Dispersionen auf der Basis von Polyvinylchlorid (PVC) zur Anwendung.

Die Wirksamkeit der erfindungsgemäßen Dämpfungsfolie wird in dem folgenden Beispiel dargelegt, ohne daß die Erfindung auf die angegebene Rezeptur festgelegt ist.

Beispiel:

70 Gew.-Teile Bariumferritpulver mit einer Korngröße kleiner als 0.3 mm werden mit 30 Gew.-Teilen Bitumen B 45 homogen vermischt und das Gemisch auf einer Foliengußmaschine zu einer 0,9 mm starken Schicht ausgegossen, die mit einer 12 μm dicken Aluminiumfolie abgedeckt wird. Darüber wird eine 1,6 mm starke Dämpfungsschicht aus einem homogenen Gemisch aus 43 Gew.- Teilen Bitumen B 45, 2 Gew.- Teilen Acrylsäureester und 2 Gew.-Teilen Polyvinylacetat, in das 22 Gew.-Teile Glimmer und 31 Gew.-Teile Schwerspat eingearbeitet sind, gegossen. Die Dämpfungsfolie wird unterseitig mit 50 $g/m^2$ und oberseitig mit 30 $g/m^2$ einer PVC-Dispersion beschichtet. Das Gewicht der fertigen Dämpfungsfolie beträgt 3,15 $kg/m^2$.

Die Tabelle zeigt einen Vergleich der Verlustfaktoren nach DIN 53 440, gemessen bei der Resonanzkurve 1. Ordnung bei unterschiedlichen Temperaturen für die erfindungsgemäße Folie nach diesem Beispiel und als Vergleich dazu für die entsprechende Folie ohne die eingelegte Aluminiumfolie.

# Tabelle:
## Verlustfaktor nach DIN 53 440

## (Resonanzkurve 2. Ordnung)

| Prüftemperatur $[°C]$ | erfindungsgemäße Folie | Vergleichsfolie |
|---|---|---|
| | Flächengewicht 4,5 Kg/m² | |
| - 20 | 0,085 | 0,07 |
| - 10 | 0,14 | 0,11 |
| 0 | 0,19 | 0,155 |
| 10 | 0,24 | 0,20 |
| 20 | 0,245 | 0,205 |
| 30 | 0,18 | 0,16 |
| 40 | 0,105 | 0,10 |

Im Gegensatz zur Vergleichsfolie, zeigt sich beim Abschmelzen der erfindungsgemäßem Dämpfungsfolie auf ein Stahlblech bei 190 °C keine Blasenbildung.

**Patentansprüche**

**1.** Dämpfungsfolie aus Bitumen, mineralischen Füllstoffen, Ferritpulver und gegebenenfalls Kunststoff- oder Kunstharzzusätzen, die unterseitig mit einem bitumenverträglichen Schmelzkleber (4) beschichtet ist und oberseitig mit einer Kaschierung (1) oder Beschichtung (6) versehen ist, **dadurch gekennzeichnet**, daß sie oberhalb der Schmelzkleberschicht (4) eine flexible, in der Dämpfungsfolie eingebettete, bis mindestens 190 °C beständige Folie (5) enthält.

**2.** Dämpfungsfolien nach Anspruch 1, **dadurch gekennzeichnet**, daß die flexible Folie (5) eine Metallfolie ist.

**3.** Dämpfungsfolie nach Anspruch 1, **dadurch gekennzeichnet**, daß die flexible Folie (5) eine Polyesterfolie ist.

**4.** Dämpfungsfolie nach den Ansprüchen 1 bis 3, **dadurch gekennzeichnet**, daß der Abstand zwischen der Schmelzkleberschicht (4) und der flexiblen Folie (5) nicht mehr als 50 %, vorzugsweise nicht mehr als 30 % der Dämpfungsfoliendicke beträgt.

**5.** Dämpfungsfolie nach den Ansprüchen 1 bis 3, **dadurch gekennzeichnet**, daß der Abstand zwischen der Schmelzkleberschicht (4) und der flexiblen Folien (5) nicht mehr als 1 mm beträgt.

## Claims

**1.** A damping foil of bitumen, mineral fillers, ferrite powder and where appropriate additives of plastics or synthetic resin, which is coated on the underside with a bitumen-compatible hot-melt adhesive (4) and is provided on the top with a laminate (1) or coating (6), characterized in that above the hot-melt adhesive layer (4) it contains a flexible foil (5) embedded in the damping foil and resistant up to at least 190°C.

**2.** Damping foils according to Claim 1, characterized in that the flexible foil (5) is a metal foil.

**3.** Damping foils according to Claim 1, characterized in that the flexible foil (5) is a polyester foil.

**4.** Damping foils according to Claims 1 to 3, characterized in that the distance between the hot-melt adhesive layer (4) and the flexible foil (5) amounts to not more than 50%, preferably not more than 30%, of the damping foil thickness.

**5.** Damping foils according to Claims 1 to 3, characterized in that the distance between the hot-melt adhesive layer (4) and the flexible foil (5) amounts to not more than 1 mm.

## Revendications

**1.** Feuille d'amortissement à base de bitume, de matières d charge minérales, de poudre de ferrite et, éventuellement d'additifs de matière synthétique ou de résine synthétique, laquelle est revêtue sur sa face inférieure d'une colle thermofusible (4) compatible avec le bitume et munie sur sa face supérieure d'un doublage (1) ou d'un revêtement (6), caractérisée en ce qu'au-dessus de la couche de colle thermofusible (4) elle contient une feuille souple (5) intégrée à la feuille d'amortissement,résistant jusqu'à au moins 190°C.

**2.** Feuilles d'amortissement selon la revendication 1, caractériséesen ce que la feuille souple (5) est une feuille métallique.

**3.** Feuille d'amortissement selon la revendication 1, caractérisée en ce que la feuille souple (5) est une feuille de polyester.

**4.** Feuille d'amortissement selon les revendications 1 à 3, caractérisée en ce que la distance entre la couche de colle thermofusible (4) et la feuille souple (5) ne dépasse pas 50%, de préférence pas 30% de l'épaisseur de la feuille d'amortissement.

**5.** Feuille d'amortissement selon les revendications 1 à 3, caractérisée en ce que la distance entre la couche de colle thermofusible (4) et la feuille souple (5) n'est pas supérieure à 1 mm.

Fig. 1

Fig. 2